(19) Europäisches Patentamt
European Patent Office
Office européen des brevets

(11) **EP 3 083 235 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(21) Anmeldenummer: **14799492.5**

(22) Anmeldetag: **19.11.2014**

(51) Int Cl.:
*C08F 285/00* (2006.01)        *C08F 265/06* (2006.01)
*B32B 7/12* (2006.01)          *C09J 7/02* (0000.00)
*C09J 151/00* (2006.01)        *B32B 27/30* (2006.01)
*B32B 27/08* (2006.01)

(86) Internationale Anmeldenummer:
**PCT/EP2014/075022**

(87) Internationale Veröffentlichungsnummer:
**WO 2015/090820 (25.06.2015 Gazette 2015/25)**

(54) **SCHERFESTE HAFTKLEBEMASSE MIT HOHEM TACK**

SHEAR-RESISTANT PSA WITH HIGH TACK

COMPOSITION ADHÉSIVE DE CONTACT RÉSISTANTE AU CISAILLEMENT ET PRÉSENTANT UNE PÉGOSITÉ ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2013 DE 102013226504**

(43) Veröffentlichungstag der Anmeldung:
**26.10.2016 Patentblatt 2016/43**

(73) Patentinhaber: **tesa SE**
**22848 Norderstedt (DE)**

(72) Erfinder:
• LÜHMANN, Bernd
22844 Norderstedt (DE)
• PRENZEL, Alexander
22529 Hamburg (DE)
• PÜTZ, Benjamin
22527 Hamburg (DE)
• RITTER, Helmut
42111 Woppertal (DE)
• ZÖLLNER, Stephan
21244 Buchholz /Nordheide (DE)

(56) Entgegenhaltungen:
EP-A1- 2 116 584     EP-A1- 2 226 372

**Beschreibung**

Aufgrund der Forderung nach hoher Effizienz und Wirtschaftlichkeit ergeben sich in der Industrie immer neue Anforderungen an Klebebänder. Dies gilt insbesondere für solche Klebebänder, die nach kurzer oder auch längerer Verklebungsdauer wieder vom Untergrund abgezogen werden sollen. Hier spielen Größen wie die Kraft, die zur Initiierung des Ablösens aufgewendet werden muss, und die Gesamt-Ablösearbeit, aber auch Stabilität des abzuziehenden Klebebandes und die Menge an auf dem Substrat verbleibenden Klebemassenrückständen eine Rolle.

Auch während der Verklebung sind wiederablösbare Klebebänder stark beansprucht. Die Klebkräfte sollen regelmäßig nicht zu stark sein, damit überhaupt eine Wiederablösbarkeit gegeben ist, andererseits muss die Verklebung aber die für den jeweiligen Einsatzzweck benötigte Beständigkeit aufweisen.

Ein illustratives Beispiel für die Anforderungen an eine wiederablösbare oder reversible Verklebung stellt die Druckklischeeverklebung dar, also die Verklebung von flexiblen Druckplatten auf Druckzylindern in der Druckindustrie. Dort müssen die Klebebänder zum einen die Rückstellkräfte der Klischees kompensieren (die sogenannte "Repulsion Resistance"), damit es nicht zu einem Kantenabheben der auf den Zylinderumfang gebogenen Klischees kommt - ein solches Abheben der Klischees würde zu einer nicht akzeptablen Beeinträchtigung des Druckbildes führen. Zum anderen müssen die Klischees aber rückstandsfrei vom Zylinder zu entfernen sein, wobei erschwerend hinzukommt, dass solche Zylinder aus unterschiedlichen Materialien wie Stahl, Polyurethan und dergleichen bestehen können und die Klebebänder möglichst universell eingesetzt werden sollen.

Wiederablösbare Haftklebemassen finden eine Vielzahl von Einsatzzwecken insbesondere auch dort, wo eine Verklebung nur für einen definierten Zeitraum bewirkt werden soll, etwa wo zwei Werkteile bis zur Einrichtung einer dauerhaften Fixierung provisorisch miteinander verbunden werden sollen, wo nur für einen vorübergehenden Zeitraum eine Kennzeichnung mittels eines Labels angebracht werden soll oder dergleichen.

Wie bereits erwähnt, spielen bei Ablöseprozessen unter anderem zwei Größen eine Rolle, nämlich die Initialkraft, die aufgewendet werden muss, um den Ablösevorgang zu beginnen (dies ist regelmäßig auch der größte beim Lösevorgang aufzuwendende Kraftaufwand, also die sogenannte Maximalkraft), sowie die Gesamtarbeit, die zum kompletten Lösen der Klebeverbindung insgesamt aufzuwenden ist (also das Integral der aufzuwendenden Kraft über die Ablösezeit). Es wurde festgestellt, dass diese Größen üblicherweise zusammenhängen: Wird die Klebemasse so eingestellt, dass die Initialkraft niedrig ist, so sinkt in der Regel auch die Gesamtablösearbeit; designt man hingegen eine Klebemasse mit einer hohen Maximal-, also Initialkraft, so ist auch die insgesamt aufzuwendende Arbeit für die Ablösung hoch.

Es kann aber gewünscht sein, diese Parameter unabhängig voneinander zu justieren, wenn man zum Beispiel eine hohe Initialkraft wünscht, damit eine Verklebung sich nicht von selbst zu lösen beginnt, insgesamt aber eine niedrige Arbeit für das Gesamtablösen gewünscht ist (das gesamte Ablösen also "leicht gehen" soll); oder wenn ein geringer Kraftaufwand zur Initiierung des Ablösevorganges einer Verklebung gewünscht ist, die Gesamtarbeit aber zahlenmäßig hoch sein darf, da der Ablösevorgang langsam und über eine entsprechend lange Zeitdauer durchgeführt wird und daher die Kräfte zu jedem einzelnen Zeitpunkt nicht zu groß sind. In der Praxis hat es sich als schwierig herausgestellt, die entsprechenden Klebemassen zu finden.

Aufgabe der Erfindung ist es daher, Haftklebemassen - insbesondere reversibel verklebbare Haftklebemassen - zur Verfügung zu stellen, bei denen sich die Initialkraft, die zur Einleitung des Ablösevorganges aufgewendet werden muss, und die Gesamtarbeit für den Ablösevorgang unabhängig voneinander einstellen lassen. Aufgabe der Erfindung ist es zudem, solche Polymere zu finden, die zur Erzeugung der entsprechenden Haftklebemassen eingesetzt werden können.

Überraschend wurde gefunden, dass insbesondere vernetzte Haftklebemassen auf Basis von verzweigten Polymeren auf Polyacrylatbasis, bei denen die Makromoleküle mindestens eine Seitenkette mit einer zahlenmittleren Molmasse von 1 000 g/mol oder mehr aufweisen, dann die gewünschten Eigenschaften aufweisen, wenn sowohl in der Hauptkette als auch in der bzw. den Seitenketten der genannten Länge Säureeinheiten zu einer Vernetzung des Polymers - insbesondere mittels geeigneter Vernetzersubstanzen - genutzt wurden.

Erfindungsgemäß wird dementsprechend ein Polymer zur Verfügung gestellt, das zur Herstellung solcher Haftklebemassen geeignet ist. Ein solches Polymer besteht aus verzweigten Makromolekülen, jeweils umfassend eine Hauptkette und eine oder mehrere an der Hauptkette befindliche Seitenketten, wobei die konstitutionellen Einheiten der Makromoleküle auf folgende Monomere

a) X Gew.-% eines oder mehrerer Acrylsäureester und/oder Methacrylsäureester, wobei $80 \leq X \leq 99,5$;
b) Y Gew.-% radikalisch copolymerisierbare Monomere mit zumindest einer Säurefunktion, wobei $0,5 \leq Y \leq 15$;
c) Z Gew.-% Vinylverbindungen, wobei $0 \leq Z \leq 5$

zurückzuführen sind und X + Y + Z = 100 ist,
wobei

mindestens eine der an der Hauptkette befindlichen Seitenketten eine zahlenmittlere Molmasse von mindestens 1 000 g/mol aufweist, und

der jeweilige Gehalt X, Y und Z an auf die einzelnen Monomere a), b) und c) zurückzuführenden konstitutionellen Einheiten sowohl in der Hauptkette wie auch in den Seitenketten mit einer zahlenmittleren Molmasse von mindestens 1 000 g/mol in Summe jeweils gleich oder verschieden sein kann,
wobei für den Fall, dass er verschieden ist, jeweils eine Abweichung nach oben oder unten um maximal 1% möglich ist,
wobei die Monomere a), b) und c) für Hauptkette und Seitenketten jeweils die gleichen Monomere oder verschiedene Monomere sein können.

Das bedeutet, dass das Mengenverhältnis der auf die einzelnen Monomere a), b) und ggf. c) zurückzuführenden konstitutionellen Einheiten im erhaltenen Polymer aus verzweigten Makromolekülen in der Hauptkette das gleiche oder zumindest im Wesentlichen das gleiche ist wie das in den Seitenketten, wobei jeweils die Summe aller Seitenketten eines Moleküls zu betrachten ist, und zwar derjenigen Seitenketten, deren zahlenmittlere Molmasse mindestens 1 000 g/mol ist. Die Monomere bzw. Monomermischungen a), b) und c) können dabei für Hauptkette und Seitenkette unterschiedlich sein. Vorzugsweise kommen jedoch dieselben Monomere bzw. Monomermischungen zum Einsatz, so dass sowohl die Hauptkette wie auch die Seitenketten aus denselben konstiutionellen Einheiten aufgebaut sind. Entsprechendes gilt für den Gehalt der einzelnen Monomerkomponenten X, Y und Z. Deren Verhältnis kann in Hauptkette und in den Seitenketten unterschiedlich sein, wobei eine Abweichung um bis zu 1%, bezogen auf die Gesamtmischung aus den Komponenten a), b) und c), möglich ist. Das heißt, dass z.B. in der Hauptkette 90% Monomerkomponente a) und 10% Monomerkomponente b) enthalten sind, während in der Seitenkette nur 89% Monomerkomponente a), dafür aber 11% Monomerkomponente b) enthalten sind. Besonders bevorzugt sind allerdings solche Ausführungsformen, in denen der Gehalt Y an Monomerkomponente b) übereinstimmt, und insbesondere bevorzugt sind solche, in denen die Gehalte X, Y und Z an Monomerkomponenten a), b) und c) übereinstimmen

Weiterhin betrifft die Erfindung ein Verfahren zur Herstellung eines solchen Polymers, wobei das Polymer durch freie radikalische Polymerisation aus einer Monomermischung erzeugt wird, die

A) zu W Gew.-% [bezogen auf die Monomermischung enthaltend die Monomergruppen A und B] folgende Monomere

a) X Gew.-% [bezogen auf die Monomergruppe A] eines oder mehrerer Acrylsäureester und/oder Methacrylsäureester, wobei $80 \leq X \leq 99,5$;
b) Y Gew.-% [bezogen auf die Monomergruppe A] radikalisch copolymerisierbare Monomere mit zumindest einer Säurefunktion, wobei $0,5 \leq Y \leq 15$;
c) Z Gew.-% [bezogen auf die Monomergruppe A] Vinylverbindungen, wobei $0 \leq Z \leq 5$

und

B) zu (100-W) Gew.-% [bezogen auf die Monomermischung enthaltend die Monomergruppen A und B] folgende Makromonomere

d) mit zumindest eine ethylenische Doppelbindung enthaltenen Gruppen endständig funktionalisierte Makromonomere, deren zahlenmittleres Molekulargewicht 1 000 g/mol oder mehr beträgt, und deren konstitutionellen Einheiten ihrerseits auf die Monomere

a) X Gew.-% eines oder mehrerer Acrylsäureester und/oder Methacrylsäureester, wobei $80 \leq X \leq 99,5$;
b) Y Gew.-% radikalisch copolymerisierbare Monomere mit zumindest einer Säurefunktion, wobei $0,5 \leq Y \leq 15$;
c) Z Gew.-% Vinylverbindungen, wobei $0 \leq Z \leq 5$ zurückzuführen sind,

enthält,
wobei $80 \leq W \leq 95$,
wobei die Monomere a), b) und c) für Monomergruppe A und Monomergruppe B jeweils die gleichen Monomere oder verschiedene Monomere sein können, und
wobei die Mengen X, Y und Z an Monomeren a), b) und c) für Monomergruppe A und Monomergruppe B jeweils gleich oder verschieden sein können.

Das bedeutet, dass in einer radikalischen Polymerisierungsreaktion eine Monomergruppe A mit einer Monomergruppe B umgesetzt wird, wobei die Monomere der Monomergruppe A noch als Monomere vorliegen, während es sich bei den Monomeren der Monomergruppe B um Makromonomere handelt. Das Gewichtsverhältnis der Monomere, aus denen die Makromonomere B aufgebaut sind, kann dabei dem Gewichtsverhältnis der Monomere A, die als Monomere zum Einsatz kommen, entsprechen oder aber die Gewichtsverhältnisse können unterschiedlich sein. Bevorzugt sind solche Ausführungsformen, in denen das Gewichtsverhältnis der Monomere, aus denen die Makromonomere B aufgebaut sind, im Wesentlichen dem Gewichtsverhältnis der Monomere, die als Monomere A zum Einsatz kommen entspricht, d.h. die Gewichtsverhältnisse sind gleich oder weichen um maximal 1%, bezogen auf die Gesamtmischung aus den Komponenten a), b) und c), voneinander ab, und besonders bevorzugt sind solche Ausführungsformen, in denen die Gewichtsverhältnisse übereinstimmen. Die Monomere bzw. Monomermischungen a), b) und c) können dabei für Hauptkette und Seitenkette unterschiedlich sein. Vorzugsweise kommen jedoch dieselben Monomere bzw. Monomermischungen zum Einsatz, so dass sowohl die Hauptkette wie auch die Seitenketten aus denselben konstitutionellen Einheiten aufgebaut sind.

Die Einteilung in die Monomergruppen A und B (Makromonomere) erfolgt dabei lediglich aus formellen Gründen zur eindeutigeren Angabe der jeweiligen Mengenverhältnisse der Monomere.

Makromonomere werden im Rahmen dieser Schrift synonym auch als Makromere bezeichnet.

Schließlich betrifft die Erfindung vorteilhafte Ausgestaltungen des erfindungsgemäßen Polymers und der erfindungsgemäßen Herstellung solcher Polymere.

Insbesondere durch sogenanntes Backbiting kann es sowohl in den Hauptketten als auch in den langen Seitenketten (hier die Seitenketten mit einem mittleren Molekulargewicht von mindestens 1 000 g/mol) jeweils zur Umlagerung kurzer Ketteneinheiten und damit zur Ausbildung einzelner kurzer Seitenketten kommen, die jeweils eine Länge von wenigen konstitutionellen Einheiten aufweisen können. Derartige kurze Seitenketten sind für die Lehre der Erfindung nicht wesentlich, sie werden im Rahmen dieser Schrift als dem jeweiligen Grundkörper (Hauptkette beziehungsweise lange Seitenkette), an dem sie hängen, zugerechnet. Als erfindungswesentlich werden nur die Seitenketten mit einem zahlenmittleren Molekulargewicht von mehr als 1 000 g/mol angesehen.

Sofern im Rahmen dieser Schrift von dem Anteil einer auf einen Monomertyp oder ein konkretes Monomer zurückzuführenden konstitutionellen Einheit in den Seitenketten die Rede ist, ist damit der sich durch Aufsummierung der entsprechenden konstitutionellen Einheiten in allen vorhandenen erfindungswesentlichen Seitenketten eines Makromoleküls gemeinsam ergebende Anteil gemeint und nicht derjenige in einer einzelnen Seitenkette.

In einer günstigen Ausführung der Erfindung weisen die erfindungsgemäßen Polymere im Mittel bevorzugt 1 bis 5, besonders bevorzugt 1 bis 3 Seitenketten mit $M_n > 1$ 000 g/mol pro Makromolekül (Polymermolekül) auf.

Bevorzugt sind ferner solche Polymere, deren zahlenmittleres Molekulargewicht zwischen 100 000 g/mol und 1 500 000 g/mol, besonders bevorzugt zwischen 200 000 g/mol und 800 000 g/mol liegt.

Angaben zu Molmassen (zahlenmittlere und gewichtsmittlere) und Polydispersitäten im Rahmen dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie 105 Å und 106 Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bezogen auf PMMA-Standards (Polymethylmethacrylat-Kalibrierung)].

Die Molmassen der Seitenketten, deren zahlenmittlere Molmasse mindestens 1 000 g/mol oder mehr beträgt, entsprechen dabei den Molmassen der bei der Herstellung der Polymere als Komponente d) eingesetzten Makromonomeren.

Haftklebemassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur, also 23 °C) dauerhaft klebrig und permanent klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Haftklebemassen umfassen demzufolge üblicherweise eine Polymerkomponente aus einem Polymer oder einem Blend (einer Mischung) mehrerer Polymeren, wobei die Polymerkomponente selbst bereits haftklebrig sein kann oder auch nicht, und optional einer Harzkomponente und/oder Zusatzstoffen, die für die Erzeugung bzw. Justierung der haftklebrigen Eigenschaften und der ansonsten gewünschten chemischen und/oder physikalischen Eigenschaften dienen. Als Harze werden im Rahmen dieser Schrift insbesondere solche oligo- und (niedrig)polymeren Verbindungen - üblicherweise amorpher Struktur - angesehen, deren zahlenmittleres Molekulargewicht $M_n$ nicht mehr als 5.000 g/mol beträgt. Selbstredend werden kurzkettige Polymerisationsprodukte, die bei der Polymerisation der oben definierten Monomermischung zur Herstellung der Polymerkomponente der erfindungsgemäßen Haftklebemasse entstehen, nicht unter den Begriff "Harze" subsumiert. Klebrigmachende Harze - auch als Klebharze bezeichnet - haben häufig Erweichungspunkte im Bereich von 80 bis 150 °C, ohne sich bei der Definition auf diese Spanne einschränken zu wollen. Die Angaben zum Erweichungspunkt $T_E$ von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung). Die Messungen erfolgen im Glycerolbad. Als Reaktivharze werden solche Harze verstanden, die funktionelle Gruppen derart aufweisen, dass sie mit weiteren Bestandteilen der Haftklebemasse - wie beispielweise den Makromolekülen der Polymerkomponenten oder anderen Reaktivharzen - unter geeigneter Aktivierung reagieren könnten.

Sofern im Rahmen dieser Schrift von einem Polymer gesprochen wird, wird darunter entsprechend einer Definition der IUPAC eine Substanz verstanden, die sich aus einem Kollektiv chemisch einheitlich aufgebauter, sich in der Regel aber hinsichtlich Polymerisationsgrad, Molmasse und Kettenlänge unterscheidender Makromoleküle (Polymermoleküle) zusammensetzt. Bei mit freier radikalischer Polymerisation erzeugten Polymeren stimmt die Art und (mittlere) Menge der konstitutionellen Einheiten in den Makromolekülen überein, während deren konkrete Abfolge variieren kann (statistische Abfolge). Im Rahmen dieser Schrift umfasst der allgemeine Ausdruck Polymer sowohl Homopolymere und Copolymere, sofern im Einzelnen nichts anderes beschrieben ist.

Stoffe mit für Haftklebeanwendungen geeigneten Eigenschaften zeichnen sich durch viskoelastisches Verhalten aus, also dadurch, dass sie bei mechanischer Deformation sowohl viskos fließen als auch elastische Rückstellkräfte aufbauen. Für gute Adhäsionseigenschaften sollen die Haftklebemassen in der Lage sein, auf das Substrat aufzufließen und eine hinreichende Benetzung der Substratoberfläche zu garantieren. Um ein Abfließen (ein Herunterlaufen) der Haftklebemassen vom Substrat zu verhindern und eine genügende Stabilität der Haftklebemasse im Klebeverbund zu garantieren, ist andererseits eine hinreichende Kohäsion der Haftklebemassen erforderlich. Um Brüche innerhalb der Verklebungsfuge (innerhalb der Haftklebemassenschicht) zu vermeiden, ist zudem eine gewisse Elastizität der Haftklebemasse gewünscht.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Um eine hinreichende Kohäsion und Elastizität der Haftklebemassen der Klebebänder zu erreichen, werden die Haftklebemassen in der Regel vernetzt, das heißt, die einzelnen Makromoleküle werden durch Brückenbindungen miteinander verknüpft. Die Vernetzung kann auf unterschiedliche Weisen geschehen, so gibt es physikalische, chemische oder thermische Vernetzungsmethoden. Durch geeignete kohäsionssteigernde Maßnahmen, wie beispielsweise Vernetzungsreaktionen (Ausbildung brückenbildender Verknüpfungen zwischen den Makromolekülen), kann außerdem der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit (Viskosität) und Kohäsion der Masse optimiert, gegebenenfalls auch erst in den Bereich der Raumtemperatur geschoben werden.

In erfindungsgemäß sehr bevorzugter Weise geht man derart vor, dass der Gehalt an auf das Monomer b) zurückzuführenden konstitutionellen Einheiten in der Hauptkette 1 bis 10 Gew.-% beträgt und/oder dass der Gehalt an auf das Monomer b) zurückzuführenden konstitutionellen Einheiten in den Seitenketten mit einer zahlenmittleren Molmasse von mindestens 1 000 g/mol in Summe ebenfalls 1 bis 10 Gew.-% beträgt, dass also jeweils gilt $1 \leq Y \leq 10$.

## Zusammensetzung der Polymere und Haftklebemassen

Vorliegend wurde für ein wie oben definiertes Polymer gefunden, dass dieses hervorragend als Basis für Haftklebemassen geeignet ist, die die erfindungsgemäß gestellte Aufgabe erfüllen. Die Monomere für das eingesetzte Polymer bzw. die eingesetzten Polymere werden dabei bevorzugt derart gewählt, dass die - gegebenenfalls weiter abgemischte und/oder gegebenenfalls vernetzte - Haftklebemasse eine Glasübergangstemperatur $T_G$ von nicht mehr als - 10 °C, bevorzugt nicht mehr als - 15 °C, hat, um die oben genannten viskoelastischen Eigenschaften bei Raumtemperatur zu realisieren.

Die Steuerung der gewünschten Glasübergangstemperatur von Copolymeren und Polymerblends kann durch geeignete Zusammenstellung der Monomermischung, welche der Polymerisation zugrunde liegt, geschehen; nämlich durch die Anwendung der Gleichung (G1) in Entsprechung zur Fox-Gleichung (vgl. T.G. Fox, Bull. Am. Phys. Soc. 1 (1956) 123):

$$\frac{1}{T_G} = \sum_n \frac{w_n}{T_{G,n}} \qquad (G1)$$

In der Gleichung (G1) repräsentiert $T_G$ die Glasübergangstemperatur des Copolymeren bzw. des Polymerblends, n die Laufzahl (Unterscheidungsindex) über die eingesetzten Monomere, $w_n$ den Gewichtsanteil des jeweiligen Monomers n (Gew.-%) und $T_{G,n}$ die jeweilige Glasübergangstemperatur des Homopolymers aus den jeweiligen Monomeren n in K. Durch geeignete Zusammenstellung der Monomermischung kann diese somit auch Monomere umfassen, für die die Glasübergangstemperatur über der Soll-Glastemperatur des herzustellenden Polymers beziehungsweise der herzustellenden Haftklebemasse liegt, wenn diese Soll-Glastemperatur durch andere anwesende Monomere wieder zu niedrigeren Werten verschoben wird.

Glasübergangstemperaturen werden im Rahmen dieser Schrift angegeben als Ergebnis von Messungen mittels dynamischer Differenzkalorimetrie DDK gemäß der DIN 53 765; insbesondere Abschnitte 7.1 und 8.1, jedoch mit einheitlichen Heiz- und Kühlraten von 10 K/min in allen Heiz- und Kühlschritten (vergl. DIN 53 765; Abschnitt 7.1; Anmerkung 1). Die Probeneinwaage beträgt 20 mg. Eine Vorbehandlung der Haftklebemasse wird durchgeführt (vgl. Abschnitt 7.1, erster Lauf). Temperaturgrenzen: - 140 °C (statt $T_G$ - 50 °C) / + 200 °C (statt $T_G$ + 50 °C). Die angegebene Glasübergangstemperatur $T_G$ ist die Probentemperatur im Heizvorgang des zweiten Laufs, bei der die Hälfte der Änderung der spezifischen Wärmekapazität erreicht ist.

Die Angabe der Glasübergangstemperaturen als Charakteristikum der eingesetzten Monomere erfolgt in Bezug auf deren jeweiliges Homopolymer. Glasübergangstemperatur von Homopolymeren beziehen sich auf das unvernetzte Homopolymer mit einer zahlenmittleren Molmasse $M_n$ im waagerechten Bereich der Fox-Flory-Beziehung (vgl. T.G. Fox; P. J. Flory, Journal of Applied Physics 21 (1950) 581-591), das heißt oberhalb des kritischen Wertes, ab dem die Glasübergangstemperatur unabhängig von der mittleren Molmasse wird; insbesondere solche Homopolymere, deren zahlenmittlere Molmasse $M_n$ mindestens 100.000 g/mol beträgt.

Als Monomere werden zum weit überwiegenden Teil Acrylmonomere gewählt, wobei als Acrylmonomere Derivate der Acrylsäure, Derivate der Methacrylsäure sowie die freien Säuren selbst - Acrylsäure und Methacrylsäure - aufgefasst werden.

Als Monomere a) werden insbesondere vorteilhaft Ester der Acrylsäure mit linearen Alkoholen mit 2 bis 14 C-Atomen und/oder Ester der Acrylsäure mit verzweigten Alkoholen mit mindestens 4 C-Atomen und/oder Ester der Methacrylsäure mit linearen Alkoholen mit 8 bis 10 C-Atomen und/oder Ester der Methacrylsäure mit verzweigten Alkoholen mit mindestens 10 C-Atomen eingesetzt; weiterhin N-Alkyl-substituierte Acrylamide, insbesondere ohne weitere Heterosubstituenten am Stickstoffatom. Erfindungsgemäß sehr geeignete Beispiele für Monomere des Typs a) sind

a1) Lineare n-Alkylacrylate, deren korrespondierende Homopolymere eine Glasübergangstemperatur von nicht mehr als - 15 °C besitzen, wie Ethylacrylat, n-Propylacrylat, n-Butylacrylat, n-Pentylacrylat, n-Hexylacrylat, n-Heptylacrylat, n-Octylacrylat, n-Nonylacrylat, n-Decylacrylat, n-Undecylacrylat,

a2) Lineare n-Alkylacrylate, deren korrespondierende Homopolymere eine Glasübergangstemperatur von mehr als - 15 °C besitzen, wie Metylacrylat, n-Dodecylacrylat, n-Tridecylacrylat, n-Tetradecylacrylat, Stearylacrylat (n-Octadecylacrylat)

a3) Lineare n-Alkylmethacrylate, deren korrespondierende Homopolymere eine Glasübergangstemperatur von nicht mehr als - 15 °C besitzen, wie n-Octylmethacrylat, n-Nonylmethacrylat, n-Decylmethycrylat, n-Undecylmethacrylat, n-Dodecylmethacrylat, n-Tridecylmethacrylat, n-Tetradecylmethacrylat, n-Pentadecylmethacrylat, n-Hexadecylmethacrylat, n-Heptadecylmethacrylat, Stearylmethacrylat (n-Octadecylmethacrylat)

a4) Lineare n-Alkylmethacrylate, deren korrespondierende Homopolymere eine Glasübergangstemperatur von mehr als - 15 °C besitzen, wie Methylmethacrylat, Ethylmethacrylat, n-Propylmethacrylat, n-Butylmethacrylat, n-Pentylmethacrylat, n-Hexylmethacrylat, n-Heptylmethacrylat,

a5) Verzweigte Alkylacrylate und Methacrylate, deren korrespondierende Homopolymere eine Glasübergangstemperatur von nicht mehr als - 15 °C besitzen, wie Isobutylacrylat, Isopentylacrylat, Isooctylacrylat, Isooctylmethacrylat, 2-Ethylhexylacrylat, 2-Ethylhexylmethacrylat, 2-Propylheptylacrylat,

a6) Heterosubstituierte Acrylamide wie N-Isopropylacrylamid, N,N-Diisopropylacrylamid, N,N-Dibutylacrylamid, N,N-Dimethylacrylamid, N,N-Diethylacrylamid, N-n-Butylacrylamid, N-sec-Butylacrylamid, N-tert-Butylacrylamid, N-Octylacrylamid, N Isopropylacrylamid, N,N-Diisopropylacrylamid, N,N-Dibutylacrylamid, N,N-Dimethylacrylamid, N,N-Diethylacrylamid.

Als Comonomere werden weiterhin radikalisch copolymerisierbare Monomere mit zumindest einer Säurefunktion eingesetzt (Monomere b)). Sehr bevorzugt werden auch hier Acrylmonomere gewählt. Die Säurefunktion ist sehr bevorzugt eine Carboxygruppe. So lassen sich beispielsweise Carbonsäuren einsetzen, die eine oder mehrere copolymerisierbare C-C-Doppelbindung im Molekül beinhalten. In besonders bevorzugter Weise wird als Monomer b) Acrylsäure eingesetzt.

Optional können auch nichtacrylische Verbindungen - also solche, die nicht als Derivate der Acrylsäure und nicht als Derivate der Methacrylsäure aufzufassen sind - mit zumindest einer Doppelbindung, die mittels radikalischer Polymerisation mit Acrylmonomeren copolymerisiert werden können, als Comonomere eingesetzt werden (Monomere c)). Falls solche Monomere vorhanden sind, werden sie bevorzugt in geringem Anteil eingesetzt, insbesondere bis zu 5 Gew.-%. Insbesondere werden Verbindungen mit zumindest einer C=C-Doppelbindung eingesetzt, die mit Acrylmonomeren copolymerisierbar sind. Hiervon umfasst sind insbesondere Vinylverbindungen, wie beispielweise Vinylester, Vinylether, Vinylhalogenide, Vinylidenhalogenide, Vinylverbindungen mit aromatischen Cyclen und Heterocyclen, insbesondere in α-Stellung zur Doppelbindung. Aber auch andere mit Acrylmonomeren copolymerisierbare Verbindungen sind hier grundsätzlich einsetzbar.

In einer bevorzugten Ausführungsform der Erfindung kann das erfindungsgemäße Polymer allein - also ohne Beimischung weiterer Polymere und Harze - und ohne weitere Additivierung (Ausnahme: gegebenenfalls erforderliche Vernetzersubstanzen) als Haftklebemasse geeignet sein, insbesondere nach Vernetzung, nämlich dann, wenn das gegebenenfalls vernetzte - Polymer selbst bereits haftklebende Eigenschaften hat. Dies ist insbesondere dann der Fall, wenn das Polymer an sich eine Glasübergangstemperatur von nicht mehr als - 10 °C, insbesondere nicht mehr als - 15 °C aufweist. Die Monomere a) werden dann überwiegend - zu mehr als 50 Gew.-%; der Anteil ist abhängig von der Menge an Monomeren mit höherer Glasübergangstemperatur und Monomeren b)- derart gewählt, dass ihre korrespondierenden Homopolymeren eine Glasübergangstemperatur von ebenfalls nicht mehr als -10 °C, bevorzugt nicht mehr als - 15 °C haben; siehe oben. Die Formulierung "allein" soll dabei nicht ausschließen, dass sich im Endprodukt noch Reste an eingesetzten Monomeren bzw. Makromonomeren befinden, wobei vorzugsweise eine vollständige Umsetzung erfolgt ist.

Eine weitere Ausführungsform der Erfindung ist eine solche, bei der die Haftklebemasse ebenfalls ausschließlich aus der Polymerkomponente besteht, also insbesondere keine Harze und - mit Ausnahme von Vernetzersubstanzen - keine Additive enthält, bei der die Polymerkomponente aber zwei oder mehr Polymere umfasst. Bevorzugt ist die Polymerkomponente für die Verwendung als Haftklebemasse auch in diesem Fall vernetzt. Neben zumindest einem erfindungsgemäßen Polymer können hier auch weitere, nicht erfindungsgemäße Polymere in der Polymerkomponente vorhanden sein, besonders bevorzugt besteht die Polymerkomponente überwiegend aus erfindungsgemäßen Polymeren. Besonders bevorzugt besteht die Polymerkomponente ausschließlich aus zwei oder aus mehreren erfindungsgemäßen Polymeren, so dass keine nicht erfindungsgemäßen Polymere vorhanden sind. Diese Formulierung soll nicht ausschließen, dass sich im Endprodukt noch Reste an eingesetzten Monomeren bzw. Makromonomeren befinden, wobei vorzugsweise eine vollständige Umsetzung erfolgt ist. Die Monomere zur Herstellung der einzelnen Polymerkomponenten werden bevorzugt derart gewählt, dass die - insbesondere vernetzte - Haftklebemasse insgesamt eine Glasübergangstemperatur von nicht mehr als - 10 °C, bevorzugt von nicht mehr als - 15 °C aufweist.

Zur Feinjustierung der Haftklebeeigenschaften oder als beitragende Komponenten zu einer Vernetzungs- oder Härtungsreaktion sind Haftklebemassen häufig Harze beigemischt (wie klebrigmachende Harze und/oder Reaktivharze). Die erfindungsgemäße Haftklebemasse kann entsprechend der beiden vorstehend genannten Ausführungsvarianten hervorragend ohne die Beimischung von Harzen realisiert werden, ohne dass dies einen nachteiligen Einfluss auf ihre Eignung als Haftklebemasse hätte. Dabei kann sowohl auf klebrigmachende, auf thermoplastische als auch auf Reaktiv-Harze verzichtet werden. Insbesondere führt die Abwesenheit von Harzen zu einer besonders rückstandfreien Substratoberfläche nach der Demontage eines Klebebandes, das mit der entsprechenden Haftklebemasse ausgerüstet ist.

Zur besagten Feinjustierung kann es aber auch gewünscht sein, der Polymerkomponente Harze und/oder Additive zuzusetzen. In einer dritten Ausführungsform kann die erfindungsgemäße Haftklebemasse daher neben der Polymerkomponente, die entsprechend einer der beiden vorstehend dargestellten Ausführungsformen zusammengesetzt ist, eine Harzkomponente - insbesondere eine solche aus einem oder mehreren Klebharzen - und/oder die für Haftklebemassen üblichen Additive umfassen. Die Monomere zur Herstellung der einzelnen Polymerkomponenten werden dann bevorzugt wiederum derart gewählt, dass die - insbesondere vernetzte - Haftklebemasse als Ganzes - hier also inklusive der Harz- bzw. Additivbeimischungen - eine Glasübergangstemperatur von nicht mehr als - 10 °C, bevorzugt von nicht mehr als - 15 °C aufweist. Geeignete Klebharze umfassen natürliche und/oder synthetische Harze, wie sie dem Fachmann grundsätzlich als Cokomponenten für Haftklebemassen bekannt sind, beispielsweise unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze. Sehr bevorzugt werden Harze gewählt, die mit der Polymerkomponente verträglich (in ihr löslich und/oder mit ihr homogen mischbar) sind.

**Verfahren zur Herstellung der Makromonomere**

Die erfindungsgemäßen Polymere können vorteilhaft derart erhalten werden, dass die Monomere

Gruppe A)

a) ein oder mehrere Acrylsäureester und/oder Methacrylsäureester
b) ein oder mehrere radikalisch copolymerisierbare Monomere mit zumindest einer Säurefunktion
c) optional ein oder mehrere Vinylverbindungen

und
Gruppe B)

d) ein oder mehrere mit zumindest einer ethylenischen Doppelbindung enthaltenen Gruppen endständig funktionalisierte Makromonomere, deren zahlenmittleres Molekulargewicht 1 000 g/mol oder mehr beträgt, und deren konstitutionellen Einheiten auf die Monomere

a) 80 bis 99,5 Gew.-% eines oder mehrerer Acrylsäureester und/oder Methacrylsäureester
b) 0,5 bis 15 Gew.-% radikalisch copolymerisierbare Monomere mit zumindest einer Säurefunktion
c) 0 bis 5 Gew.-% Vinylverbindungen

zurückzuführen sind,
derart vorgelegt - insbesondere miteinander gemischt - werden, dass die Vorlage 80 bis 95 Gew.-% der insbesondere nicht-polymeren Monomere der Gruppe A und 5 bis 20 Gew.-% des bzw. der Makromonomere der Gruppe B enthält (Angaben hier bezogen auf die Gesamtheit der Monomere der Monomergruppen A und B),
wobei die Anteile der Monomere a) bis c) in der Monomergruppe A wie folgt im Verhältnis stehen (Angaben hier bezogen auf die Monomergruppe A): a) 80 bis 99,5 Gew.-% Acrylsäureester und/oder Methacrylsäureester, b) 0,5 bis 15 Gew.-% radikalisch copolymerisierbare Monomere mit zumindest einer Säurefunktion, c) 0 bis 5 Gew.-% Vinylverbindungen,
und die Vorlage einer freien radikalischen Polymerisation unterzogen wird.

**Herstellung der endgruppenfunktionalisierten Makromoleküle**

Die erfindungsgemäßen Polymere können hervorragend hergestellt werden, indem endgruppenfunktionalisierte Makromonomere, die den erforderlichen Acrylsäureanteil aufweisen, als Comonomere bei der Polymerisation eingesetzt werden, insbesondere als Comonomere für eine freie radikalische Polymerisation. Vorteilhaft weisen die Makromonomere eine Endgruppe pro Makromolekül auf. Die Funktionen der Endgruppen werden dabei derart gewählt, dass sie mit Acrylmonomeren copolymerisierbar sind, insbesondere dass sie eine olefinische Doppelbindung aufweisen. Insbesondere kann die Endgruppe eine Acryloyl-, eine Methacryloyl- oder eine Vinylgruppe sein oder beinhalten, besonders bevorzugt eine Acryloylamido- oder eine Methacryloylamidogruppe sein oder beinhalten.

Während der radikalischen Polymerisation werden die Makromonomere über die Doppelbindungen ihrer endständigen funktionellen Gruppen derart in die entstehenden Polymere eingebaut, dass die Makromoleküle als Seitenketten an den durch die Monomere der Monomergruppe A aufgebauten Hauptketten hängen, deren Länge (ausgedrückt über deren zahlenmittlerem Molekulargewicht) dem zahlenmittleren Molekulargewicht der vorherigen Makromoleküle entspricht. Die konstitutionellen Einheiten der Polymer-Hauptkette, die auf die früheren endständigen funktionellen Gruppen der Makromonomere zurückzuführen sind, können dabei als Anteile der Hauptkette (und entsprechend bei der Angabe deren Zusammensetzung) vernachlässigt werden.

Die Mengenverhältnisse sind dabei bevorzugt so gewählt, dass es im Mittel zu 1 bis 5, besonders bevorzugt zu 1 bis 3 Seitenketten pro Polymermolekül kommt.

Im Rahmen der jeweils erlaubten Anteile können die Monomere a), b) und c) der Monomergruppe A in der Vorlage unabhängig von den Anteilen der jeweils auf die Monomere a), b) und c) zurückzuführenden konstitutionellen Einheiten in den Makromonomeren gewählt werden. Bevorzugt wird die Zusammensetzung der Monomere a), b) und c) in der Monomergruppe A) aber derart gewählt, dass im resultierenden Polymer die Anteile der jeweils auf die Monomere a), b) und c) zurückzuführenden konstitutionellen Einheiten in der Hauptkette (die aus den Monomeren der Monomergruppe A stammenden konstitutionellen Einheiten) und die Anteile der jeweils auf die entsprechenden Monomertypen a), b) und c) zurückzuführenden konstitutionellen Einheiten in den Seitenketten nahe beieinanderliegen, insbesondere nicht mehr als einen Prozentpunkt (Gew.-%; jeweils bezogen auf die Gesamtheit der Monomere a), b) und c) in der Hauptkette bzw. in den Seitenketten (in Summe)) voneinander abweichen. Besonders bevorzugt stimmt die Zusammensetzung der konstitutionellen Einheiten - bezogen auf den jeweiligen Anteil der auf die Monomere a), b) und c) zurückzuführenden konstitutionellen Einheiten - in der Hauptkette und in den Seitenketten überein.

Sehr bevorzugt weisen in jedem der drei vorgenannten Fälle die einzelnen Seitenketten untereinander dieselbe Zusammensetzung - bezogen auf den jeweiligen Anteil der auf die Monomere a), b) und c) zurückzuführenden konstitutionellen Einheiten - auf, es ist aber grundsätzlich auch möglich, dass die Seitenketten im Rahmen der angegebenen Grenzen in ihrer Zusammensetzung variieren.

Besonders bevorzugt wird derart vorgegangen, dass sowohl die konkret gewählten Monomere als auch deren jeweiligen Anteile in der Hauptkette und in den Seitenketten (in Summe) übereinstimmen.

Die endgruppenfunktionalisierten Makromonomere können dabei beispielsweise mittels radikalischer Polymerisation unter Einsatz difunktioneller Regler erhalten werden, wobei die Regler insbesondere derart gewählt werden, dass sie neben einer stark regelnden funktionellen Gruppe $-R_{F1}$ eine solche $R_{F2}$ mit nicht oder schwach regelnder Wirkung aufweisen (im weiteren wird der die funktionelle Gruppen verbindende Molekülteil des Reglers mit $R_M$ bezeichnet). In einer bevorzugten Weise ist der Regler $(R_{F1}-R_M-R_{F2})$ so gewählt, dass bei der durchgeführten Polymerisationsreaktion zur Herstellung der Makromonomere - also bei gewählten Monomerkonzentrationen und Lösemitteln - die Übertragungskonstante der zweiten funktionellen Gruppe $(R_{F2})$ um mindestens den Faktor 10, bevorzugt um mindestens den Faktor 100 geringer als die Übertragungskonstanten der stark regelnden funktionellen Gruppe $(R_{F1})$. Insbesondere hat es sich als vorteilhaft herausgestellt, als stark regelnde Gruppe $-R_{F1}$ eine Thiolfunktion (-SH) zu wählen und als schwach regelnde funktionelle Gruppe $-R_{F2}$ eine Hydroxy-Gruppe, eine Carboxy-Gruppe oder eine Aminogruppe ($-NH_2$ -NHR). Derartige difunktionelle Regler haben sich für freie radikalische Reaktionen für alle gängigen Lösemittel und in den angegebenen Monomergrenzen als sehr vorteilhaft erwiesen.

Als Beispiele für geeignete Regler seien 2-Aminoethanthiolhydrochlorid, 2-Mercaptoethanol, 3-Mercaptopropionsäure, 2-Mercaptopropionsäure und 2-Mercaptoessigsäure genannt.

Besonders bevorzugt als Regler werden solche Regler eingesetzt, bei denen die funktionelle Gruppe $-R_{F2}$ eine Hydroxy-Gruppe ist, wie 2-Mercaptoethanol, 3-Mercaptopropanol, 4-Mercaptobutanol, 5-Mercaptobutanol, 6-Mercaptohexanol, 11-Mercaptoundecanol, 16-Mercaptohexadecanol, 1-Mercapto-2-Propanol, 3-Mercapto-1-propanol, 3-Mercapto-1-Hexanol.

Während der geregelten Polymerisation, die in Lösung, in Substanz oder in der Schmelze stattfinden kann, wachsen die Polymerketten an dem Reglerrest, der bei der Übertragung die Radikalfunktion übernommen hat (•S-$R_M-R_{F2}$), statistisch, bis das Wachstum seinerseits durch eine Übertragungsreaktion oder eine andere Radikalabbruchsreaktion beendet wird. Dabei erhält man eng verteilte Makromoleküle. Gegebenenfalls ist es von Vorteil, die zweite funktionelle Gruppe $-R_{F2}$ während der Polymerisation zu schützen, etwa durch Überführung in ein Salz.

In einem zweiten Reaktionsschritt werden die - gegebenenfalls zuvor entschützten - funktionellen Gruppe $-R_{F2}$ in solche Gruppen überführt, die mit Acrylaten copolymerisierbar sind, insbesondere in Acryloylgruppen, Acryloylamidogruppen, Methacryloylgruppen, Methacryloylamidogruppen oder Vinylgruppen. Dazu können die dem Fachmann bekannten Reaktionen zum Einsatz kommen, mit denen eine funktionelle Gruppe in eine andere funktionelle Gruppe überführt werden kann, zum Beispiel Veresterungen, Umesterungen, Amidierungen.

Dabei kann die Einführung der copolymerisierbaren funktionellen Gruppe in die Makromoleküle durch folgende Reaktionspartner geschehen, um nur einige Beispiele zu nennen: Methacrylsäureanhydrid, Glycidylmethacrylat (bei carboxyterminierten Makromolekülen sehr bevorzugt katalysiert, etwa mit N,-N-Dimethyldodecylamin als Katalysator), 2-Isocyanatoethylmethacrylat, 2-Isocyanatoethylacrylat, Methacrylasäurechlorid (insbesondere in Anwesenheit von Triethylamin); Acrylsäurechlorid (insbesondere in Anwesenheit von Triethylamin).

Besonders in den vorgenannten Fällen, in denen solche Regler eingesetzt wurde, bei denen die funktionelle Gruppe $-R_{F2}$ eine Hydroxy-Gruppe ist, werden als Reaktionspartner sehr bevorzugt polymerisierbare Anhydride eingesetzt, wie zum Beispiel Acrylsäureanhydrid und/oder Methacrylsäureanhydrid und/oder Itaconsäureanhydrid. Hierdurch ist eine selektive Reaktion an den endständigen Hydroxygruppen gewährleistet, ohne dass es zu Nebenreaktionen mit Säuregruppen in den einpolymerisierten Polymerketten (insbesondere zurückzuführen auf die Komponenten b) kommen kann.

Die Temperaturführung ist abhängig vom gewählten Initiator und von dem gewählten Lösungsmittel.

Mittels des genannten Verfahrens ist es möglich, endgruppenfunktionalisierte copolymerisierbare Makromere mit eingebauten Säurefunktionen zu erhalten. Durch Verwendung der Regler mit zwei unterschiedlichen Übertragungskonstanten und der selektiven Reaktionsführung bei der Umsetzung der funktionellen Gruppe $-R_{F2}$ werden die copolymerisierbaren Gruppen nur endständig eingebaut und reagieren nicht mit den Säuregruppen in der Kette. Dadurch ist es möglich, (acryl)säurehaltige Makromonomere herzustellen, die unter anderem mit weiteren säurehaltigen Comonomeren (insbesondere Carbonsäuren, wie Acrylsäure) reagieren, und somit die erfindungsgemäßen Polymere zu erzeugen.

Die erfindungsgemäßen Polymere - bevorzugt die nach dem vorstehenden Verfahren hergestellten erfindungsgemäßen Polymere - werden für die Verwendung als Haftklebemasse sehr bevorzugt vernetzt. Hierzu werden insbesondere nach erfolgter Polymerisation Vernetzersubstanzen (auch einfach als Vernetzer bezeichnet) zu dem Polymer gemischt, insbesondere solche, die mit den Säuregruppen der Monomere b), insbesondere mit der Acrylsäure, im Sinne einer netzaufbauenden Reaktion (Verknüpfungsreaktionen zwischen den einzelnen Makromolekülen) reagieren können. Falls die Vernetzer sich bezüglich der Polymerisationsreaktion inert verhalten, können sie in alternativer Vorgehensweise bereits zusätzlich oder ausschließlich vor Beendung der Polymerisation bereist zu der Monomermischung oder im Laufe des Polymerisationsverfahren zugesetzt werden.

Geeignete Vernetzer für die erfindungsgemäßen Polymere sind beispielsweise Metallchelate, insbesondere Aluminiumchelate, weiterhin N,N-Diglycidylamine, Epoxide, Isocyanate, Aziridine.

Metallchelate werden besonders bevorzugt in einer Menge von 0,15 bis 0,4 Gew.-Teile, bezogen auf 100 Gew.-Teile des zu vernetzenden Polymers, eingesetzt. Besonders gut geeignet ist beispielsweise Aluminium-(III)-Acetylacetonat (CAS-Nr. 13963-57-0).

N,N-Diglycidylamine werden bevorzugt in einer Menge von 0,025 bis 0,1 Gew.-Teile, bezogen auf 100 Gew.-Teile des zu vernetzenden Polymers, eingesetzt. Als sehr geeignet hat sich beispielsweise das Produkt Erisys™ GA 240 der Firma CVC (CAS-Nr. 63738-22-7) herausgestellt.

Epoxide werden bevorzugt in einer Menge von 0,1 bis 0,4 Gew.-Teile, bezogen auf 100 Gew.-Teile des zu vernetzenden Polymers, eingesetzt. Ein bevorzugtes, kommerziell erhältliches Epoxid ist Uvacure™ 1500 (CAS-Nr. 2386-87-0) der Firma Cytec.

Isocyanate werden bevorzugt in einer Menge von 0,1 bis 0,4 Gew.-Teile, bezogen auf 100 Gew.-Teile des zu vernetzenden Polymers, eingesetzt. Erfindungsgemäß sehr geeignet ist beispielsweise Desmodur™ N 3300 der Firma Bayer (CAS-Nr. 28182-81-2).

Aziridine werden bevorzugt in einer Menge von 0,05 bis 0,2 Gew.-Teile, bezogen auf 100 Gew.-Teile des zu vernetzenden Polymers, eingesetzt. Hier ist ein geeigneter Vertreter dieser Gruppe zum Beispiel Xama™ 7 der Firma Ichemco (CAS-Nr. 57116-45-7).

Ein Einsatzgebiet, für das sich die erfindungsgemäßen Haftklebemassen besonders gut eignen, ist die eingangs bereits erwähnte Verklebung von Druckklischees auf Druckzylindern. Durch die Kombination einer geringen, aber ausreichend hohen Adhäsionskraft zum Substrat, die einhergeht mit einer hinreichend hohen Initialkraft, um die Verklebung wieder zu lösen, aber einer hohen Gesamtarbeit, die aufgewendet werden muss, um das Klebeband vollständig vom Substrat zu lösen, ist eine sichere Verklebung des Druckklischees gegeben, und es kommt nicht zum Kantenablösen; dennoch lassen sich die Klebebänder rückstandsfrei wieder von unterschiedlichen Zylindermaterialien wieder ablösen.

**Beispiele**

Die Erfindung wird im Folgenden anhand von Beispielen näher erläutert. Dabei kommen neben den bereits vorstehend beschriebenen Testverfahren die folgenden Methoden zum Einsatz:

SAFT - Shear Adhesive Failure Temperature

Dieser Test dient der Schnellprüfung der Scherfestigkeit von Klebebändern unter Temperaturbelastung.

Messprobenpräparation:

Die Klebebandprobe (auf 50 $\mu$m PET-Folie beschichtete Haftklebemasse) wird auf eine geschliffene, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe beträgt Höhe x Breite = 13 mm x 10 mm, die Probe wird senkrecht aufgehängt, überragt am oberen Rand die Stahl-Prüfplatte um 2 mm und wird bündig mit einem stabilen Klebestreifen verstärkt, der als Auflage für den Wegmessfühler dient.

Messung:

Die zu messende Probe wird am unteren Ende mit einem Gewicht von 50 g belastet. Die Stahl-Prüfplatte mit der verklebten Probe wird beginnend bei 25 °C mit einer Rate von 9 °C pro Minute auf die Endtemperatur von 200 °C aufgeheizt. Gemessen wird der Rutschweg der Probe mittels Wegmessfühler in Abhängigkeit von Temperatur und Zeit. Der maximale Rutschweg ist auf 1000 $\mu$m festgelegt, bei überschreiten wird der Test abgebrochen. Prüfklima: Raumtemperatur 23 $\pm$ 3 °C, relative Luftfeuchtigkeit 50 $\pm$ 5 %.

Positives Testergebnis:

- Rutschweg nach Erreichen der Endtemperatur(200°C) angegeben in $\mu$m.

Negatives Testergebnis:

- Temperatur bei Erreichen des maximalen Rutschweges (1000 $\mu$m) angegeben in °C.

Mikroscherweg-Test (Test B)

Dieser Test dient der Prüfung der Scherfestigkeit von Klebebändern unter einer Temperaturbelastung von 40 °C.

Messprobenpräparation:

Als zu untersuchende Probe wurde ein Streifen der oben beschriebenen Muster auf eine polierte, temperierbare, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug Höhe x Breite = 13 mm x 10 mm, die Probe wurde senkrecht aufgehängt, überragte am oberen Rand die Stahl-Prüfplatte um 2 mm und wurde bündig mit einem stabilen Klebestreifen verstärkt, der als Auflage für den Wegmessfühler diente.

Messung:

Die zu messende Probe wurde am unteren Ende mit einem Gewicht von 100 g belastet. Die Stahl-Prüfplatte mit der verklebten Probe wurde auf 40 °C temperiert. Gemessen wurde die Deformation der Probe mittels Wegmessfühler über einen Zeitraum von 15 Minuten. Die Prüfung erfolgte bei einer Raumtemperatur von 23 $\pm$ 3 °C und einer relativen Luftfeuchtigkeit von 50 $\pm$ 5 %.

**Versuche**

In Experimenten wurde der Effekt, der sich durch die Zusammensetzung der erfindungsgemäßen Polymere ergibt, untersucht. Dabei beschreiben die Beispiele 1 bis 15 erfindungsgemäße Haftklebemassen und die Beispiele V16 bis V23 Vergleichsversuche.

**Herstellung Makromere**

Die eingesetzten Mengen für die folgende Reaktion können aus Tabelle 1 entnommen werden.

Ein für radikalische Polymerisationen konventioneller 0,5 L-Glasreaktor wurde mit 2-Ethyhexylacrylat (EHA), ggf. Acrylsäure (AS) und Mercaptoethanol (ME) befüllt. Nach 45 minütiger Durchleitung von Stickstoffgas unter Rühren wurde Vazo® 67 (2,2'-Azobis(2-methylbutyronitril, DuPont) hinzugegeben. Anschließend wurde das äußere Heizbad auf 75 °C erwärmt und die Reaktion konstant bei dieser Außentemperatur durchgeführt.

Nach 15 Stunden Reaktionszeit wurde nicht umgesetztes Monomer und 2-Mercaptoethanol im Vakuum bei 120°C entfernt. Anschließend wurde eine, zur eingesetzten Menge Mercaptoethanol, äquimolare Menge Methacrylsäureanhydrid hinzugegeben. Die Reaktion wurde für weitere 12 h bei einer Heizbadtemperatur von 100°C durchgeführt, um das mit olefinischer Doppelbindung endgruppenfunktionalisierte Oligomer, das Makromonomer, zu erhalten. Die bei der Reaktion entstehende Methacrylsäure wurde im Vakuum bei 120°C entfernt.

**Tabelle 1**

|         | 2-EHA  | AS   | ME     | Vazo® 67 | Methacrylsäureanhydrid |
|---------|--------|------|--------|----------|------------------------|
| **1-3** | 99 g   | 1 g  | 1,72 g | 0,53 g   | 3,40 g                 |
| **4-6,V23** | 95 g | 5g | 1,83 g | 0,53 g   | 3,61 g                 |
| **7-9** | 95 g   | 5g   | 0,91 g | 0,53 g   | 1,80 g                 |
| **10-12** | 90 g | 10g  | 1,96 g | 0,53 g   | 3,87 g                 |
| **13-15** | 85 g | 15g  | 2,09 g | 0,53 g   | 4,13 g                 |
| **V17-V19** | 100 g | - | 1,70 g | 0,53 g  | 3,35 g                 |
| **V20-V22** | 100 g | - | 0,85 g | 0,53 g  | 1,67 g                 |

**Herstellung des Kammpolymers**

Ein für radikalische Polymerisationen konventioneller 2,5 L-Glasreaktor wurde mit 2-Ethylhexylacrylat (EHA), Acrylsäure (AS) und dem jeweiligen Makromonomer befüllt. Die Mengen können aus Tabelle 2 entnommen werden. Anschließend wird dem Monomergemisch 266,7 g Ethylacetat zugegeben. Nach 45minütiger Durchleitung von Stickstoffgas unter Rühren wurde der Reaktor auf 58 °C geheizt und 0,2 g Vazo® 67 hinzugegeben. Anschließend wurde das äußere Heizbad auf 70 °C erwärmt und die Reaktion konstant bei dieser Außentemperatur durchgeführt. Nach 1 h Reaktionszeit wurden wiederum 0,2 g Vazo® 67 hinzugegeben. Über einen Zeitraum von 5 h wurde jeweils stündlich je nach Viskositätsanstieg mit jeweils 100 g bis 200 g Ethylacetat verdünnt. Zur Reduktion der Restmonomere wurden nach 6 und nach 7 h jeweils 0,6 g Bis-(4-*tert*-butylcyclohexyl)peroxydicarbonat hinzugegeben und zwischendurch noch mit 100 g Ethylacetat verdünnt. Die Reaktion wurde nach 24 h Reaktionszeit abgebrochen und auf Raumtemperatur abgekühlt.

Tabelle 2

| Versuchsbeispiel | EHA | AS | Makromer |
|---|---|---|---|
| 1 | 376,2 g | 3,8 g | 20 g |
| 2 | 356,4 g | 3,6 g | 40 g |
| 3 | 316,8 g | 3,2 g | 80 g |
| 4 | 361 g | 19 g | 20 g |
| 5 | 342 g | 18 g | 40 g |
| 6 | 304 g | 16 g | 80 g |
| 7 | 361 g | 19 g | 20 g |
| 8 | 342 g | 18 g | 40 g |
| 9 | 304 g | 16 g | 80 g |
| 10 | 342 g | 38 g | 20 g |
| 11 | 324 g | 36 g | 40 g |
| 12 | 288 g | 32 g | 80 g |
| 13 | 323 g | 57 g | 20 g |
| 14 | 306 g | 54 g | 40 g |
| 15 | 272 g | 48 g | 80 g |
| V16 | 380 g | 20 g | 0 g |
| V17 | 361 g | 19 g | 20 g |
| V18 | 342 g | 18 g | 40 g |
| V19 | 304 g | 16 g | 80 g |
| V20 | 361 g | 19 g | 20 g |
| V21 | 342 g | 18 g | 40 g |
| V22 | 304 g | 16 g | 80 g |
| V23 | 266 g | 14 g | 120 g |

**Ergebnisse**

Variiert wurden der Acrylsäureanteil im Polymeren und in den eingesetzten Makromonomeren, der sich im Polymer als derjenige in den Seitenketten wiederfindet (jeweils 1, 5, 10 bzw. 15 Gew.-%, bezogen auf das Polymer bzw. bezogen auf die eingesetzten Makromonomere; in den Vergleichsversuchen auch geringer und höher); die Makromerkonzentration in der eingesetzten Monomermischung, was dem durch Seitenketten beanspruchten Anteil (in Gew.-%) im Polymer entspricht (jeweils 5, 10 bzw. 15 Gew.-% bezogen auf die eingesetzte Monomermischung, im Vergleichsversuch auch ohne Makromonomer-Einsatz) und die Kettenlänge der eingesetzten Makromonomere.

Für die erfindungsgemäßen Beispiele zeigt sich, dass sich die Größen Initialkraft ("$F_{max}$") und Arbeit ("Integral") gegenläufig verhalten (mit ansteigender Makromonomer-Konzentration im Polymer sinkt die Initialkraft, während die Ablösearbeit ansteigt). Von linearen Polyacrylaten kennt man das Verhalten, dass mit Maßnahmen, die die Initialkraft erhöhen, auch die Gesamt-Ablösearbeit ansteigt (beispielsweise die Zumischung geeigneter klebkraftsteigernder Harze), während solche Maßnahmen, die die Initialkraft senken, auch die Gesamt-Ablösearbeit senken. Die Vergleichsversuche V 17 bis V19 und V20 bis V22 zeigen, dass auch für solche Polymere, die zwar Seitenketten mit einem zahlenmittleren Molekulargewicht von mehr als 2 000 g/mol aufweisen, wobei diesen Seitenketten aber keine Acrylsäureeinheiten beinhalten, ein gleichläufiger Trend von Initialkraft und Ablösearbeit zu beobachten ist. Der Gesamt-Acrylsäureanteil im Polymeren, der hier den erfindungsgemäßen Beispielen 4 bis 6 entspricht, ist also keine hinreichende Bedingung für das erfindungsgemäß festgestellte Verhalten. Ebenso ist es problematisch (wiederum bei gleichem Acrylsäureanteil, bezogen auf das Polymer), wenn die Acrylsäureeinheiten hauptsächlich in die Seitenketten verschoben sind:

Wird der Anteil der Seitenketten am Polymermolekül zu groß (steigt der Anteil der Komponente B) zur Einführung der Seitenketten insbesondere über 20 Gew.-%); siehe Beispiel V23), so sinken die Klebkräfte auch dann, wenn der Acrylsäureanteil in der Hauptkette und den Seitenketten gleichverteilt ist und im an sich vorteilhaften Bereich liegt, und werden zu gering.

Tabelle 3

| Versuch/Beispiel | AS-Anteil gesamt [Gew.-%](1) | Makromer | | Mikroscherweg | | SAFT [°C] | Probe Tack | |
|---|---|---|---|---|---|---|---|---|
| | | AS-Anteil Makromer [Gew.-%](2) | Makromer-konzentration [Gew.-%](1) | Maximum [µm] | Elastischer Anteil [%] | | Fmax [N] | Integral [Nmm] |
| **Erfindungsgemäße Beispiele (AS in der Haupt und Seitenkette)** | | | | | | | | |
| 1 | 1 | 1 | 5 | 485 | 76 | 155 | 1,103 | 0,243 |
| 2 | 1 | 1 | 10 | 412 | 77 | 158 | 1,095 | 0,269 |
| 3 | 1 | 1 | 20 | 285 | 79 | 162 | 1,082 | 0,281 |
| 4 | 5 | 5 | 5 | 188 | 80 | 165 | 1,382 | 0,119 |
| 5 | 5 | 5 | 10 | 174 | 86 | 162 | 1,388 | 0,148 |
| 6 | 5 | 5 | 20 | 124 | 85 | 170 | 1,241 | 0,163 |
| 7 | 5 | 5 | 5 | 178 | 81 | 165 | 1,693 | 0,123 |
| 8 | 5 | 5 | 10 | 165 | 86 | 164 | 1,398 | 0,158 |
| 9 | 5 | 5 | 20 | 122 | 86 | 169 | 1,245 | 0,187 |
| 10 | 10 | 10 | 5 | 125 | 84 | 180 | 1,556 | 0,111 |
| 11 | 10 | 10 | 10 | 112 | 85 | 182 | 1,536 | 0,118 |
| 12 | 10 | 10 | 20 | 99 | 85 | 181 | 1,513 | 0,127 |
| 13 | 15 | 15 | 5 | 75 | 84 | > 200 | 1,545 | 0,112 |
| 14 | 15 | 15 | 10 | 73 | 86 | > 200 | 1,542 | 0,122 |
| 15 | 15 | 15 | 20 | 71 | 85 | > 200 | 1,541 | 0,134 |
| **Vergleichsbeispiele** | | | | | | | | |
| V16 | 5 | Kein Makromer | | 265 | 79 | 175 | 1,474 | 0,113 |
| V17 | 5 | 0 | 5 | 311 | 75 | 162 | 1,599 | 0,115 |
| V18 | 5 | 0 | 10 | 150 | 78 | 169 | 1,586 | 0,089 |
| V19 | 5 | 0 | 20 | 122 | 86 | 172 | 1,364 | 0,056 |
| V20 | 5 | 0 | 5 | 231 | 76 | 163 | 1,716 | 0,117 |
| V21 | 5 | 0 | 10 | 168 | 80 | 167 | 1,064 | 0,058 |
| V22 | 5 | 0 | 20 | 128 | 85 | 172 | 0,644 | 0,031 |
| V23 | 5 | 5 | 30 | 99 | 96 | 120 | 0,423 | 0,031 |

AS = Acrylsäure
(1) bezogen auf die eingesetzte Gesamt-Monomermischung (Monomergruppen A + B)
(2) bezogen auf die eingesetzten Makromonomere

Charakterisierung der eingesetzten Makromonomere

Tabelle 4

| Beispiele | Comonomere | AS-Anteil [Gew.-%] | Mn [g/mol] | PDI [-] |
|---|---|---|---|---|
| 1-3 | AS, EHA | 1 | 2.800 | 1,7 |
| 4-6, V23 | AS, EHA | 5 | 2.600 | 1,5 |
| 7-9 | AS, EHA | 5 | 5.600 | 1,6 |
| 10-12 | AS, EHA | 10 | 2.600 | 1,5 |
| 13-15 | AS, EHA | 15 | 2.600 | 1,8 |
| V17-V19 | EHA | - | 2.500 | 1,5 |
| V20-V22 | EHA | - | 5.500 | 1,7 |
| AS = Acrylsäure<br>EHA = 2-Ethylhexylacrylat<br>Mn = zahlenmittleres Molekulargewicht<br>PDI = Polydispersität | | | | |

**Patentansprüche**

1.  Polymer aus verzweigten Makromolekülen, jeweils umfassend eine Hauptkette und eine oder mehrere an der Hauptkette befindliche Seitenketten,
    wobei die konstitutionellen Einheiten der Makromoleküle auf folgende Monomere

    a) X Gew.-% eines oder mehrerer Acrylsäureester und/oder Methacrylsäureester, wobei $80 \leq X \leq 99{,}5$;
    b) Y Gew.-% radikalisch copolymerisierbare Monomere mit zumindest einer Säurefunktion, wobei $0{,}5 \leq Y \leq 15$;
    c) Z Gew.-% Vinylverbindungen, wobei $0 \leq Z \leq 5$

    zurückzuführen sind und X + Y + Z = 100 ist,
    **dadurch gekennzeichnet, dass**
    mindestens eine der an der Hauptkette befindlichen Seitenketten eine zahlenmittlere Molmasse von mindestens 1 000 g/mol aufweist und dass
    der jeweilige Gehalt X, Y und Z an auf die einzelnen Monomere a), b) und c) zurückzuführenden konstitutionellen Einheiten sowohl in der Hauptkette wie auch in den Seitenketten mit einer zahlenmittleren Molmasse von mindestens 1 000 g/mol in Summe jeweils gleich oder verschieden sein kann,
    wobei für den Fall, dass er verschieden ist, jeweils eine Abweichung nach oben oder unten um maximal 1% möglich ist,
    wobei die Monomere a), b) und c) für Hauptkette und Seitenketten jeweils die gleichen Monomere oder verschiedene Monomere sein können.

2.  Polymer nach Anspruch 1, **dadurch gekennzeichnet, dass** der Gehalt an auf das Monomer b) zurückzuführenden konstitutionellen Einheiten sowohl in der Hauptkette wie auch in den Seitenketten mit einer zahlenmittleren Molmasse von mindestens 1 000 g/mol in Summe Y Gew.-% beträgt.

3.  Polymer nach Anspruch 2, **dadurch gekennzeichnet, dass** auch der Gehalt an auf die Monomer a) und c) zurückzuführenden konstitutionellen Einheiten sowohl in der Hauptkette wie auch in den Seitenketten mit einer zahlenmittleren Molmasse von mindestens 1 000 g/mol in Summe X bzw. Z Gew.-% beträgt.

4.  Polymer nach einem der vorangehenden Ansprüche, **dadurch gekennzeichnet, dass** $1 \leq Y \leq 10$.

5.  Polymer nach einem der vorangehenden Ansprüche, **dadurch gekennzeichnet, dass** die Zahl der Seitenketten mit einer zahlenmittleren Molmasse von 1 000 g/mol oder mehr bei der überwiegenden Zahl der Makromoleküle zwischen 1 und 5 liegt.

**6.** Polymer nach einem der vorangehenden Ansprüche, **dadurch gekennzeichnet, dass** das zahlenmittlere Molekulargewicht des Polymers zwischen 100 000 g/mol und 1 500 000 g/mol, insbesondere zwischen 200 000 und 800 000 g/mol, liegt.

**7.** Polymer nach einem der vorangehenden Ansprüche, **dadurch gekennzeichnet, dass** als Monomere a) ganz oder überwiegend solche Acrylsäureester und/oder Methacrylsäureester gewählt werden, deren Homopolymere eine Glasübergangstemperatur (dynamische Differenzkalorimetrie gemäß DIN 53 765; Heizrate 10 K/min) von nicht mehr als -10 °C, bevorzugt nicht mehr als -15 °C, aufweisen.

**8.** Polymer nach einem der vorangehenden Ansprüche, **dadurch gekennzeichnet, dass** als Monomere a) ganz oder überwiegend Ester der Acrylsäure mit linearen primären Alkoholen mit 3 - 10 C-Atomen im Alkoholrest und/oder Ester der Methacrylsäure mit linearen primären Alkoholen mit mehr als 8 C-Atomen im Alkoholrest gewählt werden.

**9.** Polymer nach einem der vorangehenden Ansprüche, **dadurch gekennzeichnet, dass** als Monomere b) eine oder mehrere Carbonsäuren gewählt werden.

**10.** Polymer nach Anspruch 9, **dadurch gekennzeichnet, dass** als Monomer b) Acrylsäure gewählt wird.

**11.** Haftklebemasse, deren Polymerkomponente ein oder mehrere Polymere nach einem der vorangehenden Ansprüche enthält.

**12.** Haftklebemasse nach Anspruch 11, **dadurch gekennzeichnet, dass** die Polymerkomponente ausschließlich ein oder mehrere Polymere nach einem der Ansprüche 1 bis 10 umfasst.

**13.** Haftklebemasse nach einem der Ansprüche 11 oder 12, **dadurch gekennzeichnet, dass** sie harzfrei ist.

**14.** Haftklebemasse nach einem der Ansprüche 11 bis 13, **dadurch gekennzeichnet, dass** die Haftklebemasse vernetzt ist.

**15.** Verfahren zur Herstellung eines Polymers nach einem der Ansprüche 1 bis 10, wobei das Polymer durch freie radikalische Polymerisation aus einer Monomermischung erzeugt wird, die

A) zu W Gew.-% [bezogen auf die Monomermischung enthaltend die Monomergruppen A und B] folgende Monomere

a) X Gew.-% [bezogen auf die Monomergruppe A] eines oder mehrerer Acrylsäureester und/oder Methacrylsäureester, wobei $80 \leq X \leq 99{,}5$;
b) Y Gew.-% [bezogen auf die Monomergruppe A] radikalisch copolymerisierbare Monomere mit zumindest einer Säurefunktion, wobei $0{,}5 \leq Y \leq 15$;
c) Z Gew.-% [bezogen auf die Monomergruppe A] Vinylverbindungen, wobei $0 \leq Z \leq 5$

und
B) zu (100-W) Gew.-% [bezogen auf die Monomermischung enthaltend die Monomergruppen A und B] folgende Makromonomere

d) mit zumindest eine ethylenische Doppelbindung enthaltenen Gruppen endständig funktionalisierte Makromonomere, deren zahlenmittleres Molekulargewicht 1 000 g/mol oder mehr beträgt, und deren konstitutionellen Einheiten ihrerseits auf die Monomere

a) X Gew.-% eines oder mehrerer Acrylsäureester und/oder Methacrylsäureester, wobei $80 \leq X \leq 99{,}5$;
b) Y Gew.-% radikalisch copolymerisierbare Monomere mit zumindest einer Säurefunktion, wobei $0{,}5 \leq Y \leq 15$;
c) Z Gew.-% Vinylverbindungen, wobei $0 \leq Z \leq 5$, zurückzuführen sind,

enthält,
wobei $80 \leq W \leq 95$,
wobei die Monomere a), b) und c) für Monomergruppe A und Monomergruppe B jeweils die gleichen Monomere oder verschiedene Monomere sein können, und

16

wobei die Mengen X, Y und Z an Monomeren a), b) und c) für Monomergruppe A und Monomergruppe B jeweils gleich oder verschieden sein können,

wobei für den Fall, dass sie verschieden sind, jeweils eine Abweichung nach oben oder unten um maximal 1% möglich ist.

16. Verfahren zur Herstellung eines Polymers nach Anspruch 15, **dadurch gekennzeichnet, dass** die Monomere a), b) und c) für Monomergruppe A und Monomergruppe B jeweils die gleichen Monomere sind

17. Verfahren zur Herstellung eines Polymers nach einem der vorangehenden Ansprüche, **dadurch gekennzeichnet, dass** die Mengen X, Y und Z an Monomeren a), b) und c) für Monomergruppe A und Monomergruppe B jeweils gleich sind.

**Claims**

1. Polymer of branched macromolecules each comprising a main chain and one or more side chains located on the main chain,
   wherein the constitutional units of the macromolecules are attributable to the following monomers

   a) X % by weight of one or more acrylic acid esters and/or methacrylic acid esters, wherein $80 \leq X \leq 99.5$;
   b) Y % by weight radically copolymerizable monomers having at least one acid function, wherein $0.5 \leq Y \leq 15$;
   c) Z % by weight vinyl compounds, wherein $0 \leq Z \leq 5$

   and X + Y + Z is 100,
   **characterized in that**
   at least one of the side chains located on the main chain has a number-average molar mass of at least 1000 g/mol and **in that**
   the content X, Y and Z of constitutional units attributable to the individual monomers a), b) and c) both in the main chain and in the side chains having a number-average molar mass of at least 1000 g/mol in total can in each case be the same or different,
   wherein, in the case where the content is different, an upwards or downwards deviation of not more than 1% is possible in each case, wherein the monomers a), b) and c) for the main chain and side chains can in each case be the same monomers or different monomers.

2. Polymer according to Claim 1, **characterized in that** the content of constitutional units attributable to the monomer b) both in the main chain and in the side chains having a number-average molar mass of at least 1000 g/mol in total is Y % by weight.

3. Polymer according to Claim 2, **characterized in that** the content of constitutional units attributable to the monomers a) and c) both in the main chain and in the side chains having a number-average molar mass of at least 1000 g/mol in total is also X or Z % by weight.

4. Polymer according to one of the preceding claims, **characterized in that** $1 \leq Y \leq 10$.

5. Polymer according to one of the preceding claims, **characterized in that** the number of side chains having a number-average molar mass of 1000 g/mol or more is between 1 and 5 in the predominant number of macromolecules.

6. Polymer according to one of the preceding claims, **characterized in that** the number-average molecular weight of the polymer is between 100 000 g/mol and 1 500 000 g/mol, in particular between 200 000 and 800 000 g/mol.

7. Polymer according to one of the preceding claims, **characterized in that** there are chosen as monomers a) wholly or predominantly those acrylic acid esters and/or methacrylic acid esters whose homopolymers have a glass transition temperature (differential scanning calorimetry according to DIN 53 765; heating rate 10 K/min) of not more than -10°C, preferably not more than -15°C.

8. Polymer according to one of the preceding claims, **characterized in that** there are chosen as monomers a) wholly or predominantly esters of acrylic acid with linear primary alcohols having from 3 to 10 carbon atoms in the alcohol moiety and/or esters of methacrylic acid with linear primary alcohols having more than 8 carbon atoms in the alcohol moiety.

9. Polymer according to one of the preceding claims, **characterized in that** there are chosen as monomers b) one or more carboxylic acids.

10. Polymer according to Claim 9, **characterized in that** acrylic acid is chosen as the monomer b).

11. Pressure-sensitive adhesive, the polymer component of which comprises one or more polymers according to one of the preceding claims.

12. Pressure-sensitive adhesive according to Claim 11, **characterized in that** the polymer component comprises only one or more polymers according to one of Claims 1 to 10.

13. Pressure-sensitive adhesive according to one of Claims 11 or 12, **characterized in that** it is free of resin.

14. Pressure-sensitive adhesive according to one of Claims 11 to 13, **characterized in that** the pressure-sensitive adhesive is crosslinked.

15. Process for the preparation of a polymer according to one of Claims 1 to 10, wherein the polymer is produced by free radical polymerization from a monomer mixture comprising

   A) W % by weight [based on the monomer mixture comprising monomer groups A and B] of the following monomers

   a) X % by weight [based on monomer group A] of one or more acrylic acid esters and/or methacrylic acid esters, wherein $80 \leq X \leq 99.5$;
   b) Y % by weight [based on monomer group A] radically copolymerizable monomers having at least one acid function, wherein $0.5 \leq Y \leq 15$;
   c) Z % by weight [based on monomer group A] vinyl compounds, wherein $0 \leq Z \leq 5$

   and
   B) (100-W) % by weight [based on the monomer mixture comprising monomer groups A and B] of the following macromonomers

   d) macromonomers terminally functionalized by groups containing at least one ethylenic double bond and the number-average molecular weight of which is 1000 g/mol or more and the constitutional units of which are in turn attributable to the monomers

   a) X % by weight of one or more acrylic acid esters and/or methacrylic acid esters, wherein $80 \leq X \leq 99.5$;
   b) Y % by weight radically copolymerizable monomers having at least one acid function, wherein $0.5 \leq Y \leq 15$;
   c) Z % by weight vinyl compounds, wherein $0 \leq Z \leq 5$,

   wherein $80 \leq W \leq 95$,
   wherein the monomers a), b) and c) for monomer group A and monomer group B can in each case be the same monomers or different monomers, and
   wherein the amounts X, Y and Z of monomers a), b) and c) for monomer group A and monomer group B can in each case be the same or different, wherein, in the case where they are different, an upwards or downwards deviation of not more than 1% is possible in each case.

16. Process for the preparation of a polymer according to Claim 15, **characterized in that** the monomers a), b) and c) for monomer group A and monomer group B are the same monomers.

17. Process for the preparation of a polymer according to one of the preceding claims, **characterized in that** the amounts X, Y and Z of monomers a), b) and c) for monomer group A and monomer group B are the same.

# EP 3 083 235 B1

**Revendications**

1. Polymère constitué de macromolécules ramifiées, comprenant chacune une chaîne principale et une ou plusieurs chaînes latérales se trouvant sur la chaîne principale,
les unités constitutives des macromolécules étant attribuées aux monomères suivants :

   a) X % en poids d'un ou de plusieurs esters de l'acide acrylique et/ou esters de l'acide méthacrylique, avec $80 \leq X \leq 99,5$ ;
   b) Y % en poids de monomères copolymérisables par voie radicalaire contenant au moins une fonction acide, avec $0,5 \leq Y \leq 15$ ;
   c) Z % en poids de composés de vinyle, avec $0 \leq Z \leq 5$, et X + Y + Z = 100,

   **caractérisé en ce qu'**au moins une des chaînes latérales se trouvant sur la chaîne principale présente une masse molaire moyenne en nombre d'au moins 1 000 g/mol et **en ce que** la teneur X, Y et Z respective en les unités constitutives attribuées aux monomères a), b) et c) individuels peut à chaque fois être identique ou différente dans la chaîne principale et dans les chaînes latérales ayant une masse molaire moyenne en nombre d'au moins 1 000 g/mol au total,
   lorsqu'elle est différente, un écart vers le haut ou vers le bas d'au plus 1 % étant possible à chaque fois,
   les monomères a), b) et c) pour la chaîne principale et les chaînes latérales pouvant à chaque fois être les mêmes monomères ou des monomères différents.

2. Polymère selon la revendication 1, **caractérisé en ce que** la teneur en unités constitutives attribuées au monomère b) est de Y % en poids aussi bien dans la chaîne principale que dans les chaînes latérales ayant une masse molaire moyenne en nombre d'au moins 1 000 g/mol au total.

3. Polymère selon la revendication 2, **caractérisé en ce que** la teneur en unités constitutives attribuées aux monomères a) et c) est de X et Z % en poids aussi bien dans la chaîne principale que dans les chaînes latérales ayant une masse molaire moyenne en nombre d'au moins 1 000 g/mol au total.

4. Polymère selon l'une quelconque des revendications précédentes, **caractérisé en ce que** $1 \leq Y \leq 10$.

5. Polymère selon l'une quelconque des revendications précédentes, **caractérisé en ce que** le nombre de chaînes latérales ayant une masse molaire moyenne en nombre de 1 000 g/mol ou plus dans la majorité des macromolécules est compris entre 1 et 5.

6. Polymère selon l'une quelconque des revendications précédentes, **caractérisé en ce que** le poids moléculaire moyen en nombre du polymère est compris entre 100 000 g/mol et 1 500 000 g/mol, notamment entre 200 000 et 800 000 g/mol.

7. Polymère selon l'une quelconque des revendications précédentes, **caractérisé en ce qu'**en tant que monomère a), des esters de l'acide acrylique et/ou des esters de l'acide méthacrylique dont les homopolymères présentent une température de transition vitreuse (calorimétrie dynamique différentielle selon DIN 53 765 ; taux de chauffage 10 K/minute) inférieure ou égale à -10 °C, de préférence inférieure ou égale à -15 °C, sont choisis en totalité ou en majorité.

8. Polymère selon l'une quelconque des revendications précédentes, **caractérisé en ce qu'**en tant que monomères a), des esters de l'acide acrylique avec des alcools primaires linéaires contenant 3 à 10 atomes C dans le radical alcool et/ou des esters de l'acide méthacrylique avec des alcools primaires linéaires contenant plus de 8 atomes C dans le radical alcool sont choisis en totalité ou en majorité.

9. Polymère selon l'une quelconque des revendications précédentes, **caractérisé en ce qu'**un ou plusieurs acides carboxyliques sont choisis en tant que monomères b).

10. Polymère selon la revendication 9, **caractérisé en ce que** l'acide acrylique est choisi en tant que monomère b) .

11. Masse adhésive de contact, dont le composant polymère contient un ou plusieurs polymères selon l'une quelconque des revendications précédentes.

**12.** Masse adhésive de contact selon la revendication 11, **caractérisée en ce que** le composant polymère comprend exclusivement un ou plusieurs polymères selon l'une quelconque des revendications 1 à 10.

**13.** Masse adhésive de contact selon l'une quelconque des revendications 11 ou 12, **caractérisée en ce qu'**elle est exempte de résine.

**14.** Masse adhésive de contact selon l'une quelconque des revendications 11 à 13, **caractérisée en ce que** la masse adhésive de contact est réticulée.

**15.** Procédé de fabrication d'un polymère selon l'une quelconque des revendications 1 à 10, selon lequel le polymère est formé par polymérisation par radicaux libres à partir d'un mélange de monomères, qui contient

A) jusqu'à W % en poids [par rapport au mélange de monomères contenant les groupes de monomères A et B] des monomères suivants :

a) X % en poids [par rapport au groupe de monomères A] d'un ou de plusieurs esters de l'acide acrylique et/ou esters de l'acide méthacrylique, avec $80 \leq X \leq 99,5$ ;
b) Y % en poids [par rapport au groupe de monomères A] de monomères copolymérisables par voie radicalaire contenant au moins une fonction acide, avec $0,5 \leq Y \leq 15$ ;
c) Z % en poids [par rapport au groupe de monomères A] de composés de vinyle, avec $0 \leq Z \leq 5$,

et
B) jusqu'à (100-W) % en poids [par rapport au mélange de monomères contenant les groupes de monomères A et B] des macromonomères suivants :

d) les macromonomères à fonctionnalisation terminale comprenant des groupes contenant au moins une double liaison éthylénique, dont le poids moléculaire moyen en nombre est de 1 000 g/mol ou plus, et dont les unités constitutives sont de leur côté attribuées aux monomères

a) X % en poids d'un ou de plusieurs esters de l'acide acrylique et/ou esters de l'acide méthacrylique, avec $80 \leq X \leq 99,5$ ;
b) Y % en poids de monomères copolymérisables par voie radicalaire contenant au moins une fonction acide, avec $0,5 \leq Y \leq 15$ ;
c) Z % en poids de composés de vinyle, avec $0 \leq Z \leq 5$,

avec $80 \leq W \leq 95$,
les monomères a), b) et c) pour le groupe de monomères A et le groupe de monomères B) pouvant à chaque fois être les mêmes monomères ou des monomères différents, et
les quantités X, Y et Z de monomères a), b) et c) pour le groupe de monomères A et le groupe de monomères B) pouvant à chaque fois être identiques ou différentes, lorsqu'elles sont différentes, un écart vers le haut ou vers le bas d'au plus 1 % étant possible.

**16.** Procédé de fabrication d'un polymère selon la revendication 15, **caractérisé en ce que** les monomères a), b) et c) pour le groupe de monomères A et le groupe de monomères B sont à chaque fois les mêmes monomères.

**17.** Procédé de fabrication d'un polymère selon l'une quelconque des revendications précédentes, **caractérisé en ce que** les quantités X, Y et Z de monomères a), b) et c) pour le groupe de monomères A et le groupe de monomères B sont à chaque fois identiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T.G. FOX.** *Bull. Am. Phys. Soc.,* 1956, vol. 1, 123
- **T.G. FOX ; P. J. FLORY.** *Journal of Applied Physics,* 1950, vol. 21, 581-591
- *CHEMICAL ABSTRACTS,* 13963-57-0
- *CHEMICAL ABSTRACTS,* 63738-22-7
- *CHEMICAL ABSTRACTS,* 2386-87-0
- *CHEMICAL ABSTRACTS,* 28182-81-2
- *CHEMICAL ABSTRACTS,* 57116-45-7